# EUROPEAN PATENT APPLICATION

(11) **EP 4 617 297 A1**
(43) Date of publication of application: **17.09.2025**
(21) Application number: 24162804.9
(22) Date of filing: 11.03.2024
(51) Int. Cl.: C08G 59/40, C08G 59/68, C08J 9/12, C08K 7/22

(54) **ONE-COMPONENT EXPANDABLE THERMOSETTING EPOXY COMPOSITION WITH CONSISTENT EXPANSION PROPERTIES AFTER HUMIDITY STORAGE**

(71) Applicant: Sika Technology AG, 6340 Baar (CH)
(72) Inventor: CASPARI, Philip Horst, 8048 Zürich (CH); MUNZINGER, Noah, 8047 Zürich (CH)
(74) Representative: Sika Patent Attorneys

(57) **Abstract**

The present invention relates to a one-component thermosetting epoxy resin composition, comprising an epoxy resin **A** having on average more than one epoxide group per molecule, a latent hardener for epoxy resins, at least one heat-expandable microsphere **HEM1** with a mean particle size D (0.5) between 2.5 - 22.5 µm and at least one heat-expandable microsphere **HEM2** with a mean particle size D (0.5) between 25 - 75 µm. The epoxy resin adhesive is notable for a reduced difference in expansion volumes at 140 °C vs. 200 °C for 30 min, especially after storage at elevated temperatures and humidity.

## Description

### Technical field

The present invention pertains to the field of thermally expandable one-component thermosetting epoxy resin composition, in particular for the production of structural foams and a reinforcing element for hollow structures which comprise such a thermally expandable composition, a method for producing such reinforcing elements, their use for reinforcing a hollow structure and a method for reinforcing a hollow structure.

### Prior art

An important area of application of thermally expandable, thermosetting epoxy resin adhesives is found in vehicle construction, especially when foaming cavities in the body-in-white.

Manufactured products often contain openings and cavities or other hollow parts that result from the manufacturing process and / or are designed for other reasons such as weight reduction. Motor vehicles, for example, comprise several such openings and cavities in the entire vehicle, for example in the vehicle pillars.

It is often desirable to reinforce such openings and cavities with reinforcement elements built into the opening or cavity to reinforce the hollow structure of the manufactured product, for example a vehicle pillar, so that it becomes more resistant to mechanical stress, but with the advantage maintains the low weight of the hollow structure.

Such elements, which are used for the reinforcement, often consist of a carrier made of plastic, metal or another rigid material and one or more layers of an epoxy resin additive attached to it, in particular by injection moulding are able to expand their volume when heat or some other physical or chemical form of energy is introduced. Such components can also consist entirely of expandable material. Using an appropriate construction, it is possible to insert the reinforcement element into the cavity of the structure to be reinforced during the manufacturing process, but at the same time to make the inner walls and / or the cavities of the structure to be reinforced accessible to liquids. For example, during the manufacturing process of a vehicle, the hollow parts of a metal frame can still be largely covered by an electro-coating liquid while the reinforcement elements are already in place. During a subsequent heat treatment step, the epoxy resin composition expands, and the reinforcing element fills, or reinforces, the cavities.

Thermally expandable epoxy resin compositions currently used often consist of solid epoxy resins. These compositions also contain blowing agents. The activation of the epoxy resin takes place under activation conditions, such as elevated temperature, while at the same time the blowing agent decomposes and releases gases such as nitrogen or carbon monoxide or physically expands. This leads to the volume expansion mentioned above and the formation of a stable foam which ideally fills the cavity as intended and adheres to its walls.

Such thermally expandable epoxy resin compositions currently have the disadvantage of a significant difference in expansion volumes at 140 °C vs. 200 °C, especially after storage at elevated temperatures and humidity. Such differences/increases are providing differing/reduced values for modulus of the cured expanded composition and thus are unfavorable for structural foams designed to stiffen/reinforce a cavity.

It is thus desirable to obtain a thermally expandable composition that does not suffer from this limitation and exhibits a reduced difference in expansion volumes after curing at 140 °C vs. 200 °C, especially curing after storage of the uncured composition at elevated temperatures and humidity.

### Summary of the invention

It is an object of the present invention, therefore, to provide a thermally expandable epoxy resin composition that provides reduced difference in expansion volumes after curing at 140 °C vs. 200 °C, especially curing after storage of the uncured composition at elevated temperatures and humidity.

Surprisingly it has been found that this object can be achieved by the one-component thermosetting epoxy composition as defined in claim 1. Further aspects of the invention are subjects of further independent claims. Particularly preferred embodiments of the invention are subjects of the dependent claims.

### Certain embodiments of the invention

The present invention therefore relates to a one-component thermosetting epoxy resin composition, comprising
a) at least one epoxy resin **A** having on average more than one epoxide group per molecule;
b) at least one latent hardener for epoxy resins; and
c) at least one heat-expandable microsphere **HEM1** with a mean particle size D (0.5) between 2.5 - 22.5 µm;
d) at least one heat-expandable microsphere **HEM2** with a mean particle size D (0.5) between 25 - 75 µm.

The epoxy resin composition is one-component, meaning that the constituents of the epoxy resin composition, more particularly the epoxy resin and the hardener, are present in one component, without curing taking place at usual ambient temperature or room temperature. It can therefore be handled in this form, whereas with two-component systems the components cannot be mixed until immediately prior to use.

The curing of the one-component epoxy resin composition is accomplished by heating, typically at a temperature of more than 70°C, as in the range from 100 to 220°C, for example.

The prefix "poly" in expressions such as polyol or polyisocyanate denotes that the compound has two or more of the stated groups. A polyisocyanate, for example, is a compound having two or more isocyanate groups.

The expression "independently of one another" as used below means that in the same molecule, two or more identically denoted substituents may have identical or different meanings in accordance with the definition.

The dashed lines in the formulae in this document represent in each case the bond between the substituent in question and the associated remainder of the molecule.

Room temperature refers here to a temperature of 23°C, unless otherwise indicated.

The thermosetting one-component epoxy resin composition comprises at least one epoxy resin **A** having on average more than one epoxide group per molecule. The epoxide group is preferably in the form of a glycidyl ether group.

The fraction of the epoxy resin **A** having on average more than one epoxide group per molecule is preferably from 30 - 90 wt%, 35 - 85 wt%, 40 -75 wt%, more preferably 45 - 60 wt%, based on the total weight of the one-component thermosetting epoxy resin composition.

The epoxy resin **A** having on average more than one epoxide group per molecule is preferably a liquid epoxy resin or a solid epoxy resin, more preferably a solid epoxy resin. The term "solid epoxy resin" is very familiar to the person skilled in the epoxide art and is used in contrast to "liquid epoxy resins". The glass transition temperature of solid resins is above room temperature, meaning that at room temperature they can be comminuted into pourable powders. It is preferred if more than 70 wt.-%, more preferred more than 80 wt.-%, more than 90 wt.-%, more than 95 wt.-%, more than 98 wt.-%, of the epoxy resin **A** is a solid epoxy resin.

Preferred epoxy resins have the formula (I)

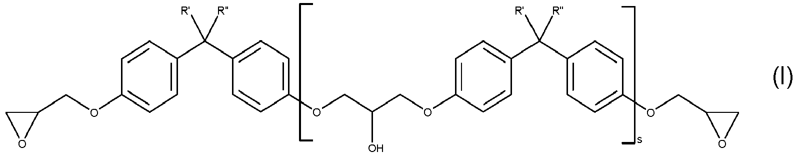

In this formula, the substituents R' and R" independently of one another are either H or CH₃.

In solid epoxy resins, the index s has a value of > 1.5, more particularly from 2 to 12.

Solid epoxy resins of this kind are available commercially, for example, from Dow or Huntsman or Hexion.

Compounds of the formula (I) having an index s of 1 to 1.5 are referred to by the person skilled in the art as semi-solid epoxy resins. For the purposes of the present invention, they are considered likewise to be solid resins. Preferred solid epoxy resins, however, are epoxy resins in the narrower sense, in other words where the index s has a value of > 1.5.

In the case of liquid epoxy resins, the index s has a value of less than 1. Preferably s has a value of less than 0.2.

The resins in question are therefore preferably diglycidyl ethers of bisphenol A (DGEBA), of bisphenol F and also of bisphenol A/F. Liquid resins of these kinds are available for example as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Of further suitability as epoxy resin **A** are what are called epoxy novolacs. These compounds have, in particular, the following formula: 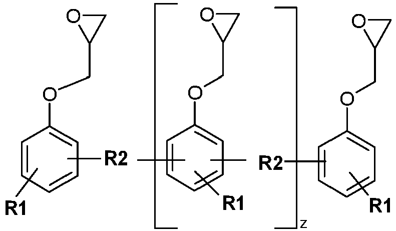 where 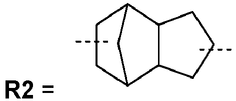 or CH₂, **R1** = H or methyl and z = 0 to 7.

More particularly these are phenol-epoxy or cresol-epoxy novolacs (R2 = CH₂).

Epoxy resins of these kinds are available commercially under the tradename EPN or ECN and also Tactix^{®} from Huntsman, or within the product series D.E.N.^{™} from Dow Chemical.

The epoxy resin **A** is preferably a solid epoxy resin of the formula (I).

The thermosetting one-component epoxy resin composition further comprises at least one latent hardener for epoxy resins. Latent hardeners are substantially inert at room temperature and are activated by elevated temperature, typically at temperatures of 70°C or more, thereby initiating the curing reaction. The customary latent hardeners for epoxy resins can be used. Preference is given to a latent epoxy resin hardener containing nitrogen.

The latent hardener is preferably selected from dicyandiamide, guanamines, guanidines, aminoguanidines and derivatives thereof, substituted ureas, imidazoles and amine complexes, preferably dicyandiamide.

The latent hardener is preferably used in a stoichiometric amount based on the epoxy groups in the composition. The molar ratio of the epoxy groups to the active hydrogen of the latent hardener is preferably 0.8 to 1.2, in particular 0.9 to 1.1, preferably 0.95 to 1.05.

The fraction of the latent hardener is preferably 0.1 to 15 wt%, more preferably 0.2 to 5 wt%, more particularly 0.5 - 3 wt%, based on the total weight of the epoxy resin composition.

The one-component thermosetting epoxy resin composition comprises c) at least one heat-expandable microsphere **HEM1** with a mean particle size D (0.5) between 2.5 - 22.5 µm; and d) at least one heat-expandable microsphere **HEM2** with a mean particle size D (0.5) between 25 - 75 µm.

The term "mean particle size" here preferably relates to the D (0.5) value of the cumulative volume distribution curve, in which 50% by volume of the particles have a particle size that is smaller than the value. The mean particle size or the D (0.5) value is preferably determined by laser diffractometry.

The presence of both, at least one heat-expandable microsphere **HEM1** as well as at least one heat-expandable microsphere **HEM2,** has the technical advantage of a reduced difference in expansion volumes at 140 °C vs. 200 °C for 30 min, especially after storage at elevated temperatures and humidity. This can be seen, for example, in table 2 in the comparison of Ref.1 - Ref.4 with E1 - E8.

When the heat-expandable microspheres **HEM1** and **HEM2** are heated, the contained substance expands in volume and the resin material constituting the outer shell softens, so that capsules (expanded capsules) expanded by internal pressure can be obtained.

Preferably, the heat-expandable microspheres **HEM1** and **HEM2** contain a liquid compound inside an outer shell made of a resin material (resin composition).

The liquid compound which is the inclusion substance constituting the heat-expandable microsphere preferably has a boiling point (atmospheric pressure condition) equal to or lower than the softening temperature of the resin material constituting the outer shell of the heat-expandable microsphere.

Preferably, the liquid compound is selected from the list consisting of n-butane, isopentane, cyclobutane, n-pentane, isopentane, cyclopentane, n-hexane, 2-methylpentane, 2,2-dimethylbutane, cyclohexane, n-heptane, cycloheptane, n-octane, cyclooctane and hydrocarbons, preferably hydrocarbons, more preferably hydrocarbons having 1 to 5 carbon atoms, most preferably hydrocarbons having 4 to 5 carbon atoms.

The liquid compound may be only one kind or two or more kinds. The liquid compound is preferably a hydrocarbon, and particularly preferably contains a low boiling point hydrocarbon having 4 to 5 carbon atoms.

The resin material constituting the outer shell preferably has thermoplasticity. Preferably, the resin material contains a structural unit derived from the list consisting of acrylonitrile, methacrylonitrile, acrylic acid alkyl ester, methacrylic acid alkyl ester, vinyl chloride, vinylidene chloride, vinyl acetate and aromatic vinyl compound, preferably acrylonitrile. More preferably, the resin material is a acrylonitrile-based copolymer.

Preferably, the shape of the heat-expandable microspheres **HEM1** and **HEM2** is spherical or elliptical.

The expansion-initiation temperature (Tₛ) of the heat-expandable microspheres **HEM1** and **HEM2** is between 100 °C - 160 °C, preferably between 110 °C - 150 °C.

Preferably, the maximum expansion temperature (Tₘₐₓ) of the heat-expandable microspheres **HEM1** and **HEM2** is between 130 °C - 170 °C, preferably between 140 °C - 165 °C, most preferably between 150 °C - 165 °C.

Preferably, the expansion-initiation temperature (Tₛ) and the maximum expansion temperature (Tₘₐₓ) are determined with a dynamic mechanical analysis (DMA Q800, manufactured by TA Instruments), more preferably in the following way:
In an aluminum cup 4.8 mm deep and 6.0 mm in diameter (5.65 mm in inside diameter), 0.5 mg of heat-expandable microspheres are placed, and the cup is covered with an aluminum cap 0.1 mm thick and 5.6 mm in diameter to prepare a sample.

The sample is subjected to the pressure of 0.01 N with the compression unit of the device, and the height of the sample is measured. The sample is then heated at temperatures elevating at a rate of 10 °C/min in the temperature range from 20 to 300 °C, being subjected to the pressure of 0.01 N with the compression unit, and the vertical change of the position of the compression unit is measured. The temperature at which the compression unit starts to change its position to the positive direction is determined as the expansion-initiation temperature (Tₛ), and the temperature
at which the compression unit indicats the greatest change is determined as the maximum expansion temperature (Tₘₐₓ).

Preferably, the amount of the sum of the heat-expandable microspheres **HEM1** and **HEM2** is 1.5 - 6 wt.-%, preferably 2 - 5 wt.-%, more preferably 3-4 wt.-%, based on the total weight of the one-component thermosetting epoxy resin adhesive.

The one-component thermosetting epoxy resin composition comprises c) at least one heat-expandable microsphere **HEM1** with a mean particle size D (0.5) between 2.5 - 22.5 µm.

It is advantagous if the at least one heat-expandable microsphere **HEM1** has a mean particle size D (0.5) between 5 - 22.5 µm, preferably 7.5 - 20 µm, more preferably 10 - 20 µm. Such a mean particle size D (0.5) has the technical advantage of a reduced difference in expansion volumes at 200 °C after storage at increased temperatures and high humidity compared to freshly produced compositions. This can be seen, for example, in table 2 in the comparison of E3 with E4 and E6 with E8.

The one-component thermosetting epoxy resin composition comprises d) at least one heat-expandable microsphere **HEM2** with a mean particle size D (0.5) between 25 - 75 µm.

Preferably, the at least one heat-expandable microsphere **HEM2** with a mean particle size D (0.5) between 30 - 60 µm, preferably 35 - 50 µm, more preferably 40 - 50 µm. Such a mean particle size D (0.5) has the technical advantage of a reduced difference in expansion volumes at 200 °C after storage at increased temperatures and high humidity compared to freshly produced compositions. This can be seen, for example, in table 2 in the comparison of E3 with E4 and E6 with E8.

It can be advantageous if the weight ratio between the heat-expandable microspheres **HEM1** and **HEM2** is 3:1 -1:3, preferably 2:1 -1:2, more preferably 1.5:1 - 1:1.5. Such a weight ratio has the technical advantage of a reduced difference in expansion volumes at 200 °C after storage at increased temperatures and high humidity compared to freshly produced compositions. This can be seen, for example, in table 2 in the comparison of E3 and E4 with E1 and E2 and in the comparison of E5 vs. E6 or E7 and E8.

It can be also advantageous if the weight ratio between the heat-expandable microspheres **HEM1** and **HEM2** is 3:1 -1:3, preferably 2:1 -1:2, more preferably 0.75:1 - 1:0.25. Such a weight ratio has the technical advantage of a reduced difference in expansion volumes at 200 °C freshly produced compositions. This can be seen, for example, in table 2 in the comparison of E3 with E6.

The one-component thermosetting epoxy resin composition might additionally comprise at least one toughness improver **D.** The toughness improvers **D** may be solid or liquid. More particularly the toughness improver **D** is selected from the group consisting of terminally blocked polyurethane polymers **D1,** liquid rubbers **D2** and core-shell polymers **D3.** With preference the additional toughness improver **D** is selected from the group consisting of terminally blocked polyurethane polymers **D1** and liquid rubbers **D2,** most preferably liquid rubbers **D2.**

Preferred liquid rubbers **D2** are carboxyl group (e.g., carboxylic acid groups) containing acrylonitrile/butadiene rubber **ABR** and reaction products thereof with polyepoxides and/or polyphenols.

Such carboxyl group containing acrylonitrile/butadiene rubbers **ABR** may also include pendant carboxy or carboxyl groups.

The carboxyl group containing acrylonitrile/butadiene rubbers **ABR** preferably have a carboxyl content of 0.005 equivalents per hundred rubber (EPHR) to 0.4 EPHR, more preferably from 0.01 EPHR to 0.2 EPHR and even more preferably from 0.05 EPHR to 0.1 EPHR.

For the carboxyl group containing acrylonitrile/butadiene rubbers **ABR,** the carboxylic groups are preferably provided by a termonomer such as methacrylic acid. The carboxyl groups containing acrylonitrile/butadiene rubbers **ABR** preferably are acrylonitrile/butadiene/methacrylic acid rubbers.

Particularly preferred carboxyl group containing acrylonitrile/butadiene rubbers **ABR** are available from Nippon Zeon under the trade name Hycar, now available under the trade name NIPOL.

The carboxyl group containing acrylonitrile/butadiene rubbers **ABR** preferably include from 10% - 50% by weight nitrile, more preferably 20% - 40% by weight nitrile and even more preferably 25% - 35% by weight nitrile.

More preferably, the liquid rubbers **D2** are epoxy resin modified acrylonitrile-butadiene copolymers. For example, they can be produced by reacting carboxy-or epoxy-terminated acrylonitrile-butadiene copolymers, also known as liquid rubbers, with polyepoxides and/or polyphenols. Preferably, the at least one epoxy resin modified acrylonitrile-butadiene copolymer is obtained by reacting one or more carboxyl-terminated butadiene-acrylonitrile copolymers (CTBN) with one or more solid epoxy resins of the formula (I) and/or one or more liquid epoxy resin of the formula (I) and/or one or more novolac type epoxy resin.

Suitable epoxy resin modified acrylonitrile-butadiene copolymers are commercially available, for example, under the trade name of Struktol^{®} from Schill & Seilacher Gruppe, Germany, such as Struktol^{®} 3604, Struktol^{®} 3606, Struktol^{®} 3611, Struktol^{®} 3614, Struktol^{®} 3654, and Struktol^{®} 3656. Suitable epoxy resin modified acrylonitrile-butadiene copolymers also include the mixtures of polymers disclosed in US patent 9,796,809 B2 as "impact strength improving agents for epoxy resin compositions".

The fraction of toughness improver **D** is preferably from 1 - 10 wt%, more preferably 2.5 -7.5 wt%, based on the total weight of the epoxy resin composition.

In one preferred embodiment, the one-component thermosetting epoxy resin composition further comprises at least one filler **F.** Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, glass fibres and colour pigments. Particularly preferred are fillers selected from the group consisting of calcium carbonate, calcium oxide, talc, glass fibres, hollow glass beads and fumed silicas, more preferably talc, glass fibres, hollow glass beads, calcium carbonate and fumed silicas.

The total fraction of the overall filler **F** is advantageously 5-50 weight-%, preferably 15-45 weight-%, more preferably 17.5-40 weight-%, based on the total weight of the epoxy resin composition.

The one-component thermosetting epoxy resin composition may comprise further constituents, especially catalysts, thixotropic agents, plasticizers, solvents, dyes and pigments, corrosion inhibitors, defoamers and adhesion promoters.

The one-component thermosetting epoxy resin composition can also contain one or more additives. Preferred additives which can be used are antioxidants, UV stabilizers, dyes, biocides or flame retardants.

The proportion of processing aid is advantageously 1 to 8% by weight, preferably 2 to 5% by weight, based on the total weight of the composition.

The one-component thermosetting epoxy resin composition preferably has a melt flow index (MFI) determined at 110 ° C., 2.16 kg in accordance with ASTM D1238 (2020 Edition), of 0.1-50 g / 10 min, in particular 0.25-30 g / 10 min, most preferably 0.5-20 g / 10 min. A value of less than 0.1 g / 10 min is disadvantageous with respect to the expansion behavior of the compositions and a value of more than 50 g / 10 min is disadvantageous since the compositions tend to become too low viscous at temperatures over 60 °C and handling/processing/using them becomes more difficult.

The one-component thermosetting epoxy resin composition is preferably an injection moldable mixture, i.e. the mixture has a viscosity suitable for injection molding at the processing temperatures. It is particularly injection-moldable without foaming.

A particularly preferred thermosetting one-component epoxy resin composition comprises:
- 30 - 90 wt%, 35 - 85 wt%, 40 -75 wt%, more preferably 45 - 60 wt%, based on the total weight of the one-component thermosetting epoxy resin composition, of the least one epoxy resin **A** having on average more than one epoxide group per molecule;
- 1.5 - 6 wt.-%, preferably 2-5 wt.-%, more preferably 3-4 wt.-%, based on the total weight of the one-component thermosetting epoxy resin composition, of a combination of heat-expandable microspheres **HEM1** and **HEM2;**
- 0.1 to 15 wt%, more preferably 0.2 to 5 wt%, more particularly 0.5 - 3 wt%, based on the total weight of the one-component thermosetting epoxy resin composition, of the at least one latent hardener for epoxy resins, more particularly dicyandiamide;
- preferably from 1 - 10 wt%, more preferably 2.5 -7.5 wt%, based on the total weight of the one-component thermosetting epoxy resin composition, of at least one toughness improver **D** selected from the group consisting of terminally blocked polyurethane polymers **D1,** liquid rubbers **D2** and core-shell polymers **D3,** preferably liquid rubbers **D2,** more preferably carboxyl group (e.g., carboxylic acid groups) containing acrylonitrile/butadiene rubber **ABR** and reaction products thereof with polyepoxides and/or polyphenols;
- preferably 5-50 weight-%, more preferably 15-45 weight-%, most preferably 17.5-40 weight-%, based on the total weight of the epoxy resin composition, of a filler **F** selected from the group consisting of talc, glass fibres, hollow glass beads, calcium carbonate and fumed silicas.

It may further be advantageous if the preferred one-component thermosetting epoxy resin composition consists to an extent of more than 80 weight%, preferably more than 90 weight%, more particularly more than 95 weight%, especially preferably more than 98 weight%, most preferably more than 99 weight%, based on the total weight of the epoxy resin composition, of the aforementioned constituents.

The one-component thermosetting epoxy resin composition is preferably tack-free at 23 ° C. The term "tack-free" is understood here to mean immediate tack or "tack", which is so low at 23 ° C that when pressed with a thumb with a pressure of about 5 kg for 1 second on the surface of the one-component thermosetting epoxy resin composition, the thumb does not stick to the surface of the composition layer or the one-component thermosetting epoxy resin composition cannot be raised.

The compositions according to the present invention can be obtained by mixing the components in any suitable mixing device, e.g. In a dispersion mixer, planetary mixer, twin screw mixer, continuous mixer, extruder or twin-screw extruder.

After mixing, the resulting composition can be molded into their desired shape e.g. by extruding, blow molding, pelletizing, injection molding, compression molding, stamping or punching or any other suitable method.

The mixing of the components preferably comprises an extrusion step, the mixed and extruded composition then being granulated. The granulated composition is then preferably brought into its desired shape by injection molding.

The foaming of the one-component thermosetting epoxy resin composition is preferably carried out independently of the curing of the epoxy resin composition, in particular beforehand. As a result, the epoxy resin composition cures only when the foaming of the epoxy resin composition has largely taken place. Otherwise, the epoxy resin composition hardens before it has reached the intended place through the foaming. It is therefore preferred that the curing temperature of the epoxy resin composition is above the foaming temperature of the epoxy resin composition.

Preferably, the expandable epoxy resin compositions show the following properties (measurements as described in the experimental section):
- Expansion 30 min @ 140°C: 50% - 300%, preferably 50% - 150%.
- Expansion 30 min @ 200°C: 50% - 300%, preferably 100% - 175%.

It is further advantages, if the expandable epoxy resin compositions display a difference in expansion volume after curing, between curing at 140 °C for 30 min compared to curing at 200 °C for 30 min, of less than 200 %, preferably less than 150 %, more preferably less than 100 %, most preferably less than 50 %. Preferably, the curing is as described in the experimental part, especially preferred after the uncured one-component thermosetting epoxy resin composition has been stored for 21 days at 35 °C and 95 % relative humidity prior to curing, preferably as described in the experimental part.

Another aspect of the invention are reinforcement elements comprising the one-component heat-curing epoxy resin composition, in particular for reinforcement in the cavities of structural components.

The one-component thermosetting epoxy resin composition is preferably applied or attached to a carrier part.

This carrier part can consist of any materials. Preferred materials are plastics, in particular polyurethanes, polyamides, polyesters and polyolefins, preferably high-temperature-resistant polymers such as poly (phenylene ethers), polysulfones or polyethersulfones, which in particular are also foamed; Metals, especially aluminum and steel; or any combination of these materials.

Furthermore, the carrier part can have any structure and structure. For example, it can be solid or hollow or have a lattice-like structure. The surface of the carrier part can typically be smooth, rough or structured. The carrier part can also contribute to the structural reinforcement in addition to its function as a carrier for the foamable material.

It is also possible that reinforcing elements have no carrier part and consist entirely of the one-component thermosetting epoxy resin composition.

The reinforcement elements comprising a carrier part and the one-component heat-curing epoxy resin composition are preferably produced by injection molding.

If the carrier part consists of a material that can be processed by injection molding, a two-component injection molding process is usually used. First, a first component, in this case the carrier part, is injected. After this first component has solidified, the cavity in the mold is enlarged or adapted, or the molded part is placed in a new mold, and a second component, in this case the epoxy resin composition, is molded onto the first component with a second injection unit. If the carrier part consists of a material that cannot be produced by the injection molding process, for example of a metal, the carrier part is placed in an appropriate tool and the epoxy resin composition is injection molded onto the carrier part.

Of course, there is also the possibility of fastening the epoxy resin composition to a carrier part by any other fastening means or method.

For the reinforcing elements mentioned, it is further advantageous if the epoxy resin composition can be foamed and cured thermally, at a temperature from 120 °C to 220 ° C., preferably from 140 ° C to 200 ° C, preferably within a time period at said temperature of 10 to 60 min.

Furthermore, the invention comprises the use of a reinforcing element, as described above, for reinforcing cavities in structural components. Structural components of this type are preferably used in bodies and / or frames of means of transport and transportation, in particular of vehicles on water or on land or of aircraft. The invention preferably includes the use of a reinforcing element according to the invention in bodies or frames of automobiles (in particular A, B, C or D pillars) trucks, railroad cars, boats, ships, helicopters and airplanes, mostly preferably in automobiles.

A further aspect of the present invention therefore relates to a method for reinforcing structural components comprising the steps
i) placing the reinforcement element in a cavity according to the previous description;
ii) heating the reinforcement element to a temperature from 120 °C to 220 °C, preferably from 140 °C to 200 °C, preferably for 10 to 60 min.

Preferably, step i) takes place before step ii).

Hence another aspect of the present invention is the use of at least one heat-expandable microsphere **HEM1** with a mean particle size D (0.5) between 2.5 - 22.5 µm together with at least one heat-expandable microsphere **HEM2** with a mean particle size D (0.5) between 25 - 75 µm in a one-component thermosetting epoxy resin composition comprising:
- at least one epoxy resin **A** having on average more than one epoxide group per molecule; and
- at least one latent hardener for epoxy resins;
for decreasing the difference in expansion volume after curing between curing at 140 °C for 30 min compared to curing at 200 °C for 30 min, preferably as described in the experimental part, especially preferred after the one-component thermosetting epoxy resin composition has been stored for 21 days at 35 °C and 95 % relative humidity, preferably as described in the experimental part.

It is preferred if the difference in expansion volume after curing between curing at 140 °C for 30 min compared to curing at 200 °C for 30 min, preferably as described in the experimental part, is less than 200 %, preferably less than 150 %, more preferably less than 100 %, most preferably less than 50 %.

Preferably the one-component thermosetting epoxy resin composition in one as described above, especially with the preferred features also mentioned above.

Preferably the heat-expandable microsphere **HEM1** and **HEM2** have the preferred features and/or ratios as mentioned before and are contained in the one-component thermosetting epoxy resin composition in the preferred amounts and ratios as mentioned before.

The decrease in the difference in expansion volume after curing between curing at 140 °C for 30 min compared to curing at 200 °C for 30 min is compared to a one-component thermosetting epoxy resin composition mentioned above without the feature of at least one heat-expandable microsphere **HEM1** with a mean particle size D (0.5) between 2.5-22.5 µm together with at least one heat-expandable microsphere **HEM2** with a mean particle size D (0.5) between 25 - 75 µm.

The invention is elucidated further in the text below by means of examples which, however, are not intended to restrict the invention in any way.

### Examples

Raw materials and test methods used for the testing of the respective properties in the examples were as follows:

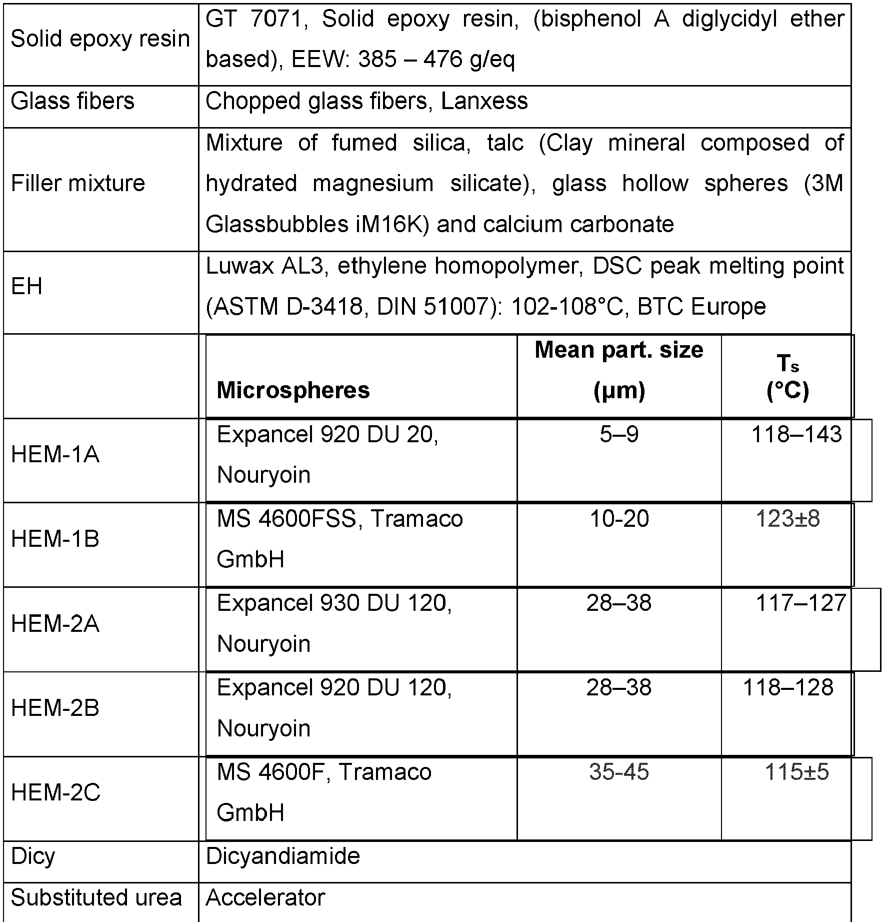

### Raw materials used

**Table 1**

| **Basic formulation** | [wt-%] |
|---|---|
| Solid epoxy resin | 59 |
| Glass fibres | 13 |
| Filler mixture | 19.7 |
| EH | 3 |
| Dicy | 1.4 |
| Substituted urea | 0.5 |
| HEM according to table 2 | 3.4 |
| **TOTAL** | 100 |

### Preparation of the compositions

According to the information in Table 1 and 2, the reference compositions Ref.1-Ref. 4 and the compositions E1-E8 according to the invention were produced. The amounts of the basic formulation shown in Table 1 are in parts by weight. For the reference compositions Ref.1-Ref. 4 and the compositions E1-E8 as shown in table 2, the basic formulation in Table 1 was used as a basis and the amounts of HEM-1A, -1B, -2A, -2B -2C, as indicated in table 2, was added to the basic formulation in Table 1. For example, in the final formulation E1, 2.25 wt.-% of HEM-1A and 1.15 wt.-% of HEM-2A was used, based on the total weight of formulation E1.

The raw materials used were mixed with a tumble mixer for 10 min. The mixtures were then introduced into a twin-screw extruder (Dr. Collin ZK 25 T SCD15) and compounded at a throughput of 2.5 kg per hour. The discharge took place through a 1-hole nozzle (3mm) on a conveyor belt. The strand obtained was cooled with forced air and then granulated using the Dr. Collin granulator integrated in the system. The granules obtained were then processed into 3 mm thick sheets using a Krauss-Maffei 110t injection molding machine. All of the compositions (Ref.1-Ref. 4 and E1-E8) had a melt flow index (MFI) determined at 110 ° C, 2.16 kg in accordance with ASTM D1238 (2020 Edition), of 0.5-20 g / 10 min.

Test methods used for the testing of the respective properties in the examples were as follows:

### Determination of foam density / volume expansion ("Expansion")

The volume expansion was tested in all samples by heat treatment of the individual samples for 30 min in an oven at the indicated temperature as shown in table 2 (object temperature: 140 °C or 200 °C).

Volume expansions were quantified for each sample by measuring the density before and after expansion. The densities were determined according to DIN EN ISO 1183 using the water immersion method (Archimedes principle) in deionized water and a precision balance to measure the mass. The results are shown in table 2.

For the samples "Initial expansion", volume expansion was tested for the samples right after production. The difference in volume expansion in percent between the expansion at 140 °C vs. 200 °C is shown as "Difference (%)".

For the samples "Expansion after 3d/55°C/20%RH", volume expansion was tested for the samples stored for 3 days at 55 °C and 20 % relative humidity. The difference in volume expansion in percent between the expansion at 140 °C vs. 200 °C is shown as "Difference (%)". The difference in volume expansion in percent between the unexpanded samples before and after storage is shown as "Pre-expansion".

For the samples "Expansion after 21d/35°C/95RH", volume expansion was tested for the samples stored for 21 days at 35 °C and 95 % relative humidity. The difference in volume expansion in percent between the expansion at 140 °C vs. 200 °C is shown as "Difference (%)". The difference in volume expansion in percent between the unexpanded samples before and after storage is shown as "Pre-expansion". The difference in the value of the volume expansion in percent between the expansion at 200 °C without storage vs. expansion at 200 °C after storage is shown as "Difference absolute".

**Table 2, *n.d. = not determined, open pores and very incoherent expansion behavior**

| **Composition** | **Ref.1** | **E1** | **E2** | **E3** | **E4** | **Ref.2** | **Ref.3** | **Ref.4** | **E5** | **E6** | **E7** | **E8** |
|---|---|---|---|---|---|---|---|---|---|---|---|---|
| **HEM used [wt-%]** | | | | | | | | | | | | |
| HEM-1A | | 2.25 | | 2.25 | | | | 1.7 | 1.7 | 1.7 | | |
| HEM-1B | | | 2.25 | | 2.25 | | | 1.7 | | | 1.7 | 1.7 |
| HEM-2A | 3.4 | 1.15 | 1.15 | | | 1.7 | 1.7 | | | | | |
| HEM-2B | | | | | | 1.7 | | | 1.7 | | 1.7 | |
| HEM-2C | | | | 1.15 | 1.15 | | 1.7 | | | 1.7 | | 1.7 |

| **Initial expansion** | | | | | | | | | | | | |
|---|---|---|---|---|---|---|---|---|---|---|---|---|
| 30' 140 °C | 134% | 134% | 135% | 144% | 147% | 110% | 79% | *n.d. | 66% | 81% | 68% | 56% |
| 30' 200 °C | 308% | 154% | 160% | 138% | 135% | 272% | 196% | *n.d. | 152% | 148% | 151% | 114% |
| Difference (%) | 130 | 15 | 19 | 4 | 9 | 147 | 148 | *n.d. | 130 | 83 | 122 | 104 |

| **Expansion after 3d/55°C/20%RH** | | | | | | | | | | | | |
|---|---|---|---|---|---|---|---|---|---|---|---|---|
| Pre-Expansion | 7% | 3% | 4% | 3% | 4% | 6% | 4% | *n.d. | 2% | 6% | 2% | 2% |
| 30' 140 °C | 121% | 91% | 106% | 107% | 114% | 106% | 87% | *n.d. | 80% | 106% | 86% | 78% |
| 30' 200 °C | 313% | 180% | 203% | 169% | 180% | 249% | 192% | *n.d. | 163% | 141% | 147% | 132% |
| Difference (%) | 159 | 98 | 92 | 58 | 58 | 135 | 121 | *n.d. | 104 | 33 | 71 | 69 |

| **Expansion after 21d/35°C/95%RH** | | | | | | | | | | | | |
|---|---|---|---|---|---|---|---|---|---|---|---|---|
| Pre-Expansion | 2% | 1% | 1% | 1% | 1% | 0% | 0% | *n.d. | -1% | 0% | -1% | 0% |
| 30' 140 °C | 142% | 111% | 120% | 123% | 137% | 143% | 106% | *n.d. | 138% | 132% | 116% | 106% |
| 30' 200 °C | 675% | 297% | 313% | 260% | 213% | 471% | 257% | *n.d. | 225% | 193% | 222% | 152% |
| Differenz absolut (%) | 367% | 143% | 153% | 122% | 78% | 199% | 61% | *n.d. | 73% | 45% | 71% | 38% |
| Difference (%) | 375 | 168 | 161 | 111 | 55 | 229 | 142 | *n.d. | 63 | 46 | 91 | 43 |

## Claims

1. One-component thermosetting epoxy resin composition, comprising
a) at least one epoxy resin **A** having on average more than one epoxide group per molecule;
b) at least one latent hardener for epoxy resins; and
c) at least one heat-expandable microsphere **HEM1** with a mean particle size D (0.5) between 2.5 - 22.5 µm;
d) at least one heat-expandable microsphere **HEM2** with a mean particle size D (0.5) between 25 - 75 µm.

2. One-component thermosetting epoxy resin composition according to Claim 1, wherein the fraction of the epoxy resin **A** having on average more than one epoxide group per molecule is from 30 - 90 wt%, 35 - 85 wt%, 40 -75 wt%, more preferably 45 - 60 wt%, based on the total weight of the one-component thermosetting epoxy resin composition.

3. One-component thermosetting epoxy resin composition according to any of the preceding claims, wherein the epoxy resin **A** is a solid epoxy resin, preferably the epoxy resin **A** has the formula (I) 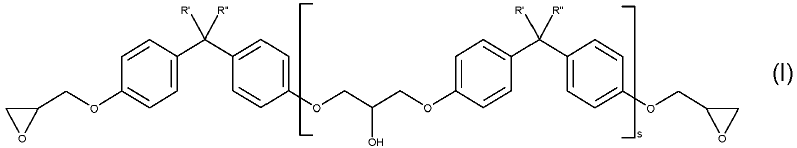 wherein the substituents R' and R" independently of one another are either H or CH₃ and the index s has a value of > 1.5, more particularly from 2 to 12.

4. One-component thermosetting epoxy resin composition according to any of the preceding claims, wherein the amount of the sum of the heat-expandable microspheres **HEM1** and **HEM2** is 1.5 - 6 wt.-%, preferably 2 - 5 wt.-%, more preferably 3 - 4 wt.-%, based on the total weight of the one-component thermosetting epoxy resin adhesive.

5. One-component thermosetting epoxy resin composition according to any of the preceding claims, wherein the at least one heat-expandable microsphere **HEM2** with a mean particle size D (0.5) between 30 - 60 µm, preferably 35 - 50 µm, more preferably 40 - 50 µm.

6. One-component thermosetting epoxy resin composition according to any of the preceding claims, wherein the weight ratio between the heat-expandable microspheres **HEM1** and **HEM2** is 3:1 - 1:3, preferably 2:1 - 1:2, more preferably 1.5:1 - 1:1.5.

7. One-component thermosetting epoxy resin composition according to any of the preceding claims, wherein the weight ratio between the heat-expandable microspheres **HEM1** and **HEM2** is 3:1 - 1:3, preferably 2:1 - 1:2, more preferably 0.75:1 - 1:0.25.

8. One-component thermosetting epoxy resin composition according to any of the preceding claims, wherein the at least one heat-expandable microsphere **HEM1** has a mean particle size D (0.5) between 5 - 22.5 µm, preferably 7.5 - 20 µm, more preferably 10 - 20 µm.

9. One-component thermosetting epoxy resin composition according to any of the preceding claims, wherein the one-component thermosetting epoxy resin composition further comprises at least one toughness improver **D** selected from the group consisting of terminally blocked polyurethane polymers **D1,** liquid rubbers **D2** and core-shell polymers **D3,** preferably liquid rubbers **D2,** more preferably carboxyl group (e.g., carboxylic acid groups) containing acrylonitrile/butadiene rubber **ABR** and reaction products thereof with polyepoxides and/or polyphenols, wherein the fraction of the toughness improver **D** is preferably from 1 - 10 wt%, more preferably 2.5 -7.5 wt%, based on the total weight of the one-component thermosetting epoxy resin composition.

10. One-component thermosetting epoxy resin composition according to any of the preceding claims, wherein the latent hardener is selected from dicyandiamide, guanamines, guanidines, aminoguanidines and derivatives thereof, substituted ureas, imidazoles and amine complexes, preferably dicyandiamide.

11. One-component thermosetting epoxy resin composition according to any of the preceding claims, wherein the one-component thermosetting epoxy resin composition further comprises at least one filler **F,** selected from the group consisting of calcium carbonate, calcium oxide, talc, glass fibres and fumed silicas, more preferably talc, glass fibres and fumed silicas.

12. One-component thermosetting epoxy resin composition according to any of the preceding claims, wherein the one-component thermosetting epoxy resin composition has a melt flow index (MFI) of 0.1-50 g / 10 min, in particular 0.25-30 g / 10 min, most preferably 0.5-20 g / 10 min, determined at 110 ° C., 2.16 kg in accordance with ASTM D1238 (2020 Edition).

13. A reinforcement element comprising the one-component heat-curing epoxy resin composition according to claims 1 - 12, in particular for reinforcement in the cavities of structural components, preferably in bodies and / or frames of means of transport and transportation.

14. A method for reinforcing structural components comprising the steps
i) placing a reinforcement element according to claim 13 in a cavity of a structural component, preferably in bodies and / or frames of means of transport and transportation;
ii) heating the reinforcement element to a temperature from 120 °C to 220 °C, preferably from 140 °C to 200 °C, preferably for 10 to 60 min.

15. Use of a at least one heat-expandable microsphere **HEM1** with a mean particle size D (0.5) between 2.5 - 22.5 µm together with at least one heat-expandable microsphere **HEM2** with a mean particle size D (0.5) between 25 - 75 µm in a one-component thermosetting epoxy resin composition comprising:
- at least one epoxy resin **A** having on average more than one epoxide group per molecule; and
- at least one latent hardener for epoxy resins; preferably as described as one-component thermosetting epoxy resin composition in any of the claims 1 - 12, for decreasing the difference in expansion volume after curing between curing at 140 °C for 30 min compared to curing at 200 °C for 30 min, preferably as described in the experimental part, especially preferred after the one-component thermosetting epoxy resin composition has been stored for 21 days at 35 °C and 95 % relative humidity, preferably as described in the experimental part.

16. Use according to claim 15, wherein the difference in expansion volume after curing between curing at 140 °C for 30 min compared to curing at 200 °C for 30 min, preferably as described in the experimental part, is less than 200 %, preferably less than 150 %, more preferably less than 100 %, most preferably less than 50 %.
